# EUROPÄISCHE PATENTSCHRIFT

(11) **EP 0 897 776 B1**
(45) Veröffentlichungstag und Bekanntmachung des Hinweises auf die Patenterteilung: **01.10.2003**
(21) Anmeldenummer: 98810762.9
(22) Anmeldetag: 10.08.1998
(51) Int. Cl.: B23Q 16/08, B23H 7/26

(54) **Kupplungsanordnung mit einer Bearbeitungseinrichtung**
Coupling device for a machining equipment
Dispositif d'accouplage pour un équipement d'usinage

(30) Priorität: 21.08.1997 CH 195497
(43) Veröffentlichungstag der Anmeldung: 24.02.1999
(73) Patentinhaber: Mecatool AG, 9230 Flawil (CH)
(72) Erfinder: Sonderegger, Peter, 9230 Flawil (CH); Roth, Walter, 9000 St. Gallen (CH)
(74) Vertreter: Weiss, Wolfgang, Dr.

(56) Entgegenhaltungen:
- EP-A- 0 180 866
- EP-A- 0 697 267
- DE-A- 3 644 049
- US-A- 4 723 805
- PATENT ABSTRACTS OF JAPAN vol. 017, no. 206 (M-1400), 22. April 1993 (1993-04-22) & JP 04 348835 A (SODICK CO LTD), 3. Dezember 1992 (1992-12-03)

## Beschreibung

Die vorliegende Erfindung bezieht sich auf eine Kupplungsanordnung für eine Bearbeitungseinrichtung, insbesondere für eine Funkenerosionsmaschine, zur drehfesten Anordnung eines zu bearbeitenden Werkstückes gemäss dem Oberbegriff des Patentanspruchs 1.

Es werden dabei nicht nur ausserordentlich hohe Anforderungen an die genaue Ausrichtung in der Horizontal- und Vertikalebene sowie auf die Einhaltung einer genauen Zentrizität gestellt, sondern es muss auch gewährleistet sein, dass das Werkstück in einer genau bestimmten Lage wiederholt eingespannt werden kann, falls am gleichen Werkstück gegebenenfalls mehrere Bearbeitungs- oder Messvorgänge durchgeführt werden müssen.

Um eine präzise Bearbeitung sicherstellen zu können, ist es äusserst wichtig, den während des Bearbeitungsvorganges auftretenden Beanspruchungen, wie z. B. hohe Spüldrücke, mittels einer starren Verbindung entgegenzuwirken.

Da bei diesen Kupplungen Messgenauigkeiten im Bereiche von Tausendstel mm eingehalten werden müssen ist die Repositionierung von Teilen äusserst zeitraubend und kostspielig.

Aus der EP 697267 A1 ist eine gattungsgemässe Befestigungsvorrichtung für ein Werkzeug oder ein Werkstück bekannt. Ein Palettenträger und eine damit verbindbare Palette weisen Mittel auf, die eine federnde Zentrierung der Palette in der X- und Y-Richtung ermöglichen. Passaussparungen an der Palette wirken zusammen mit Passvorsprüngen an dem Palettenträger. Unterhalb der Passvorsprünge sind Ausnehmungen, Höhlungen oder Schlitze zur Bildung eines elastisch nachgiebigen Bereiches ausgebildet. Zusätzliche Teile werden nicht benötigt.

Ausgehend von diesem Stand der Technik ist es Aufgabe der vorliegenden Erfindung, eine Kupplungsanordnung vorzuschlagen, mittels welcher eine hohe Positioniergenauigkeit und Stabilität des im Arbeitsraum palettierten Werkstückes erreichbar ist, wobei den besonderen Bearbeitungsbedingungen einer Erosionsmaschine bestmöglich Rechnung getragen wird.

Diese Aufgabe wird erfindungsgemäss durch die Lehre des Anspruches 1 gelöst.

Weitere vorteilhafte Ausgestaltungen ergeben sich aus den abhängigen Ansprüchen.

Von besonderem Vorteil ist es, dass die in drei Dimensionen ausgerichtete und zentrierte Palette am Palettenträger mittels einer federnden Zentrierung hochgenau abgestützt ist, und dass sich in der Palette eine Verstelleinrichtung für eine vertikale Verstellung des zu bearbeitenden Werkstückes mittels einer Schwalbenschwanzführung anbringen lässt.

Zweckmässigerweise können zum Ausrichten der Palette in der Horizontalebene paarweise am Palettenträger angeordnete, federnd wirkende Richtnocken vorhanden sein. Dabei kann die Federwirkung durch je einen Einschnitt erreicht werden, welche Einschnitte als Drahterosionsschnitte ausgebildet sein können, die je eine elastische Stütze für die darüber angeordneten Nocken bilden.

Durch die federnde Zentrierung in X- und Y-Richtung kombiniert mit der starren Auflage in Z-Richtung können Vibrationen des zu bearbeitenden Werkstückes während der Bearbeitung zuverlässig vermieden werden.

Anhand der beigelegten Zeichnungen werden bevorzugte Ausführungsbeispiele der Erfindung näher beschrieben.

Es zeigen:
- Fig.1: einen Palettenträger in schaubildlicher Darstellung,
- Fig.2: den Nockenbereich in vergrösserter Darstellung,
- Fig.3: eine Palette in schaubildlicher Darstellung,
- Fig.4a, b: einen Schnitt durch den Nockenbereich,
- Fig.5: eine Palette an einer Pendelplatte angeordnet, in schaubildlicher Darstellung und
- Fig.6: die gleiche Palette um 180° gedreht dargestellt.

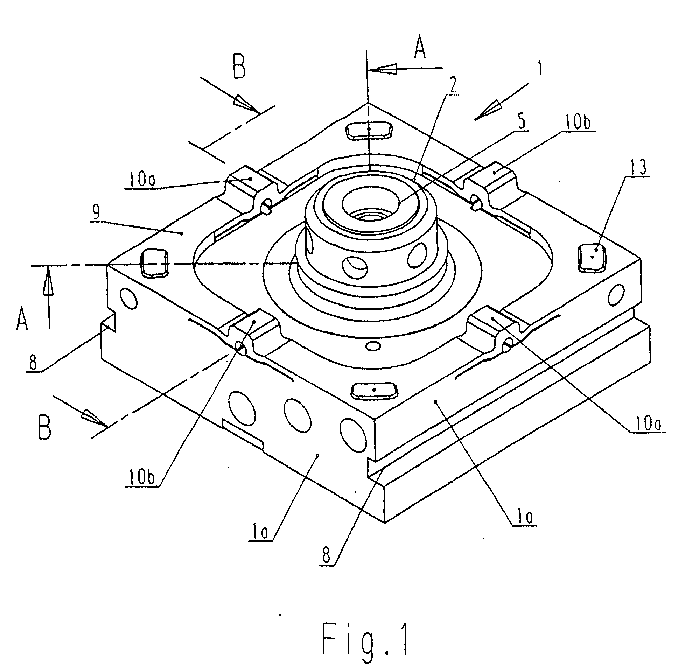

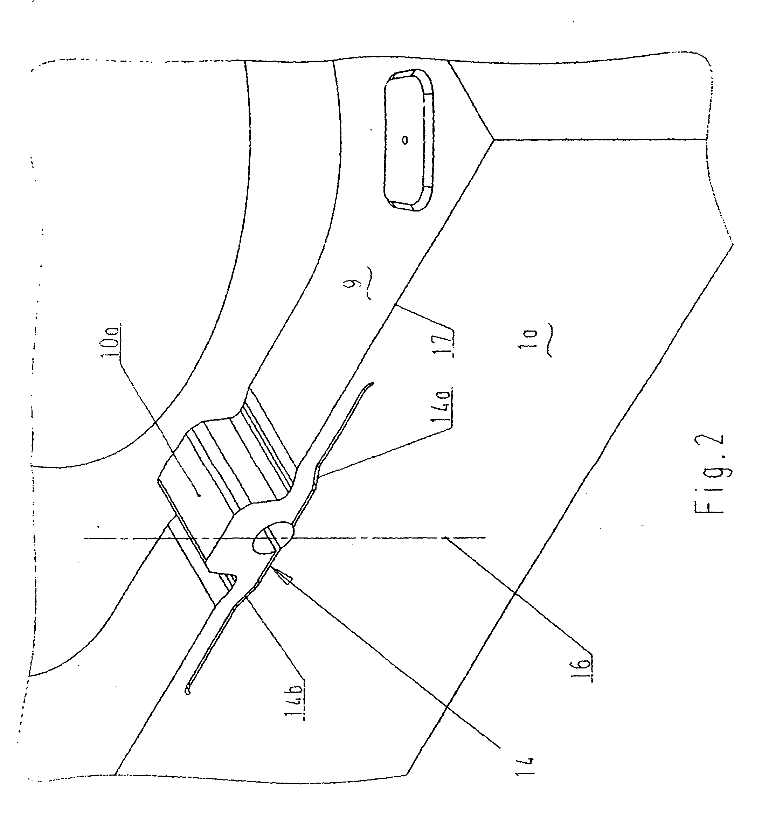

Die Kupplungseinrichtung umfasst einen Palettenträger 1, welcher fest auf der Bearbeitungsmaschine angeordnet ist und eine Palette 18, 24 welche als Werkstückträger ausgebildet ist. In den Fig. 1 und 2 ist ein Palettenträger 1 dargestellt, welcher einen viereckigen Körper mit zentraler Öffnung aufweist, in welche ein Flachkolben eingesetzt ist, der mit Hilfe eines Stiftes gegen Verdrehen gesichert ist. Der Flachkolben ist mit einer Kolbenstange ausgerüstet, welche von einer Kugelhülse 2 umgeben ist. Anschliessend an die Kolbenstange ist ein Klemmkonus 5 mittels einer Schraube befestigt. Am Umfang der Kugelhülse 2 sind in entsprechenden Ausnehmungen sechs Kugeln vorhanden, die gleichmässig am Umfang der Kugelhülse 2 verteilt sind. Mit 6 ist eine Bodenplatte des Palettenträgers 1 bezeichnet, die mit Schrauben festgemacht ist.

An zwei parallelen Seiten des Palettenträgers 1 sind Führungsrillen 8 vorgesehen, während an der, der Bodenplatte 6 abgekehrten Richtfläche 9 des Palettenträgers 1 vier Richtnocken 10a und 10b so verteilt angeordnet sind, dass je zwei gegenüberliegende Nocken 10a bzw. 10b die X- und die Y-Richtung exakt bestimmen. Für die Bestimmung der Z-Richtung sind an den vier Ecken des Palettenträgers 1 Auflageköpfe 13 vorhanden, welche die Ausrichtung der Z-Richtung entsprechend bewirken.

Die Zentriemocken 10a und 10b sind federnd nachgiebig ausgebildet. Sie weisen gegenüber der Z-Auflage einen Vorsprung auf. Wie insbesondere aus den Fig. 1 und 2 ersichtlich, ist unterhalb von jedem Nocken 10a bzw. 10b an der zugehörigen Seitenwand 1a des Palettenträgers 1 ein Einschnitt 14 beispielsweise in der Form eines Drahterosionsschnittes vorgesehen. Die Länge und die Tiefe sowie die Form der Einschnitte bestimmen die Elastizität der darüber angeordneten Nocken 10a bzw. 10b. Die Einschnitte sind bezüglich der vertikalen Symmetrieebene 16 der Nocken 10a bzw.10b so angeordnet, dass die beiden Teile 14a und 14b der Einschnitte sich in entgegengesetzten Richtungen und im wesentlichen horizontal erstrecken, parallel zur Aussenkante 17 der Richtfläche 9.

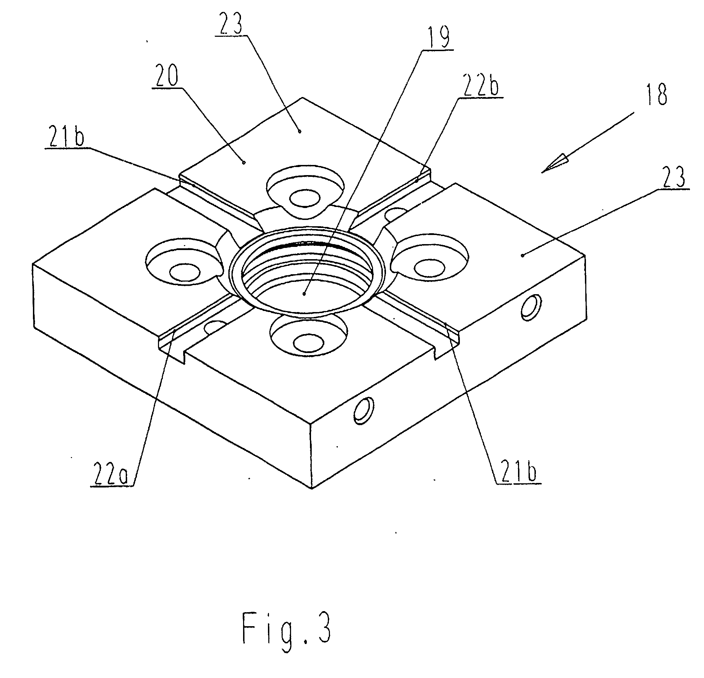

Zur Kupplungsanordnung gehört die in der Fig. 3 dargestellte Palette 18, welche als Werkstückträger dient. Die Palette 18 ist ebenfalls viereckförmig ausgebildet und weist zur Aufnahme der Kugelhülse 2 des Palettenträgers 1 ein entsprechendes, in der Mitte der Palette 18 angebrachtes Verbindungsteil mit Öffnung 19 auf. Zur genauen Fixierung der Palette 18 am Körper des Palettenträgers 1 sind an der Kupplungsfläche 20 senkrecht bzw. rechtwinklig zueinander verlaufende Führungskanäle 21a, 21 b bzw. 22a, 22b vorhanden, in welche die Nocken 10a bzw. 10b eingreifen. Die genannten Kanäle 21a und 21b bzw. 22a und 22b dienen zur XY-Orientierung der Palette 18. In der Z-Richtung wird die Palette 18 durch die mit den Auflageköpfen 13 zusammenwirkenden Ausnehmungen 23 ausgerichtet, welche eine Lagerstätte bilden.

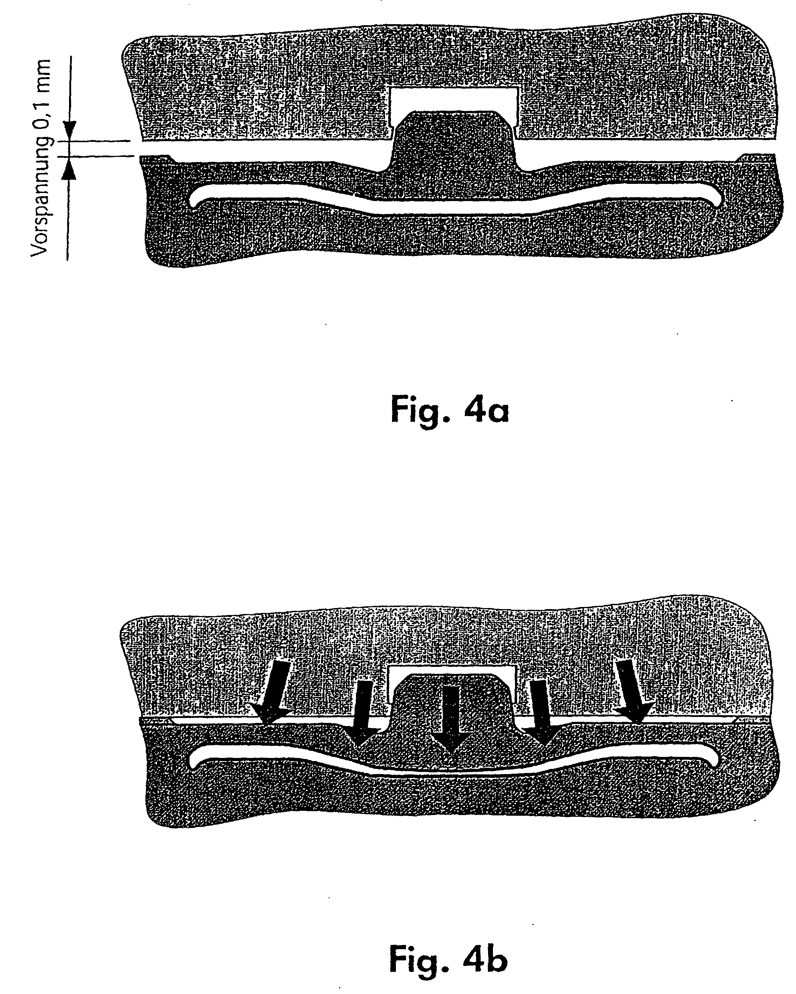

Fig. 4a zeigt einen Palettenträger 1 mit einer aufgelegten Palette 18 in ungespanntem Zustand. Der Einschnitt 14 als Mittel zum genauen Ausrichten erstreckt sich im Palettenträger 1 unterhalb des Zentriernockens 10a, 10b. Eine Palette 18 ist auf dem Palettenträger 1 erkennbar.

Fig. 4b zeigt die Palette in gespanntem Zustand. Die Palette wird mittels der Führungskanäle über den Zentriemocken positioniert und mit den Auflageköpfen in Anschlag gebracht. Dabei gibt der Zentriemocken in axialer Richtung federnd nach. Der Druck wird mit Hilfe des Einschnittes 14 aufgenommen. Damit kann das im Arbeitsraum positionierte zu bearbeitende Werkstück systemgenau ausgerichtet werden.

Beim Zusammenfügen des Palettenträgers und der Palette bewirken die Einschnitte 14 eine präzise Zentrierung für die Nocken. Alternativ wäre es möglich, die Nocken selbst elastisch nachgiebig zu gestalten, welche Lösung jedoch wesentlich aufwendiger und kostspieliger wäre.

Die Elastizität der federnden Zentrierung kann der Grösse der Palette bzw. des Werkstückes und der auftretenden Belastung durch die entsprechende Wahl der Einschnitte 14 angepasst werden.

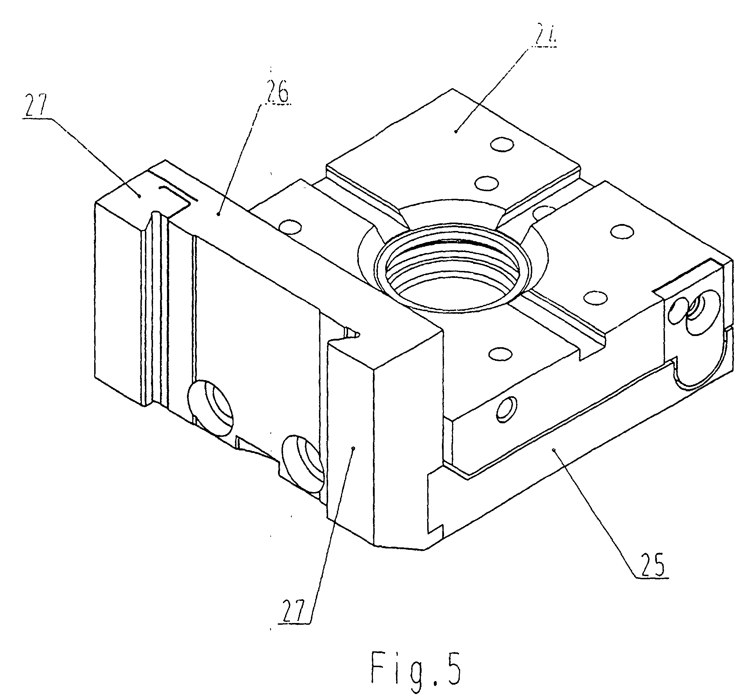

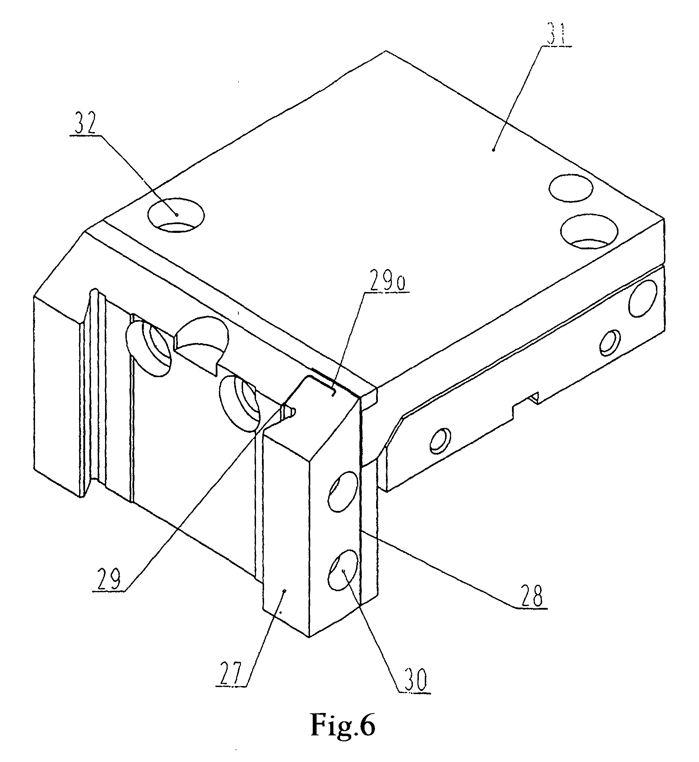

Eine weitere Ausführungsform der beschriebenen Lösung ist aus den Fig. 5 und 6 ersichtlich. Diese weist eine Palette 24 auf, welche ähnlich wie die Palette 18 der ersten Ausführung ausgebildet ist. Die Palette 24 ist auf einer Pendelplatte 25 angeordnet. Diese ist mit einer senkrecht abstehenden Tragwand 26 ausgerüstet, die beidseitig je eine Führungsrippe 27 besitzt, die zusammen eine Schwalbenschwanzführung bilden. Somit kann die Höhenverstellung des zu bearbeitenden Werkstückes auf eine einfache Art ausgeführt werden. Hier wird ein Werkstückhalter mit dem zu bearbeitenden Werkstück eingesetzt und der Bearbeitungsstellung entsprechend ausgerichtet. Die Pendelplatte 25 ist als Justierplatte 31 ausgebildet, die im Wesentlichen rechtwinklig zur Tragwand 26 ausgebildet ist Vorzugsweise sind in der Justierplatte 31 vorgespannte Federpakete 32 angeordnet, die die Positionierung und Nivellierung der Palette im Feinstbereich ermöglichen. Dies ist insbesondere in Bezug auf eine kollisionsfreie Ausrichtung bezüglich der sogenannten Null-linie d. h. der Schneidhöhe 0 von grosser Bedeutung.

Bei der beschriebenen Lösung wird eine zuverlässige und einwandfreie Abstützung erreicht, die eine Vibration der Bauteile verhindert und eine präzise Bearbeitung des Werkstückes gewährleistet. Darüber hinaus kann die Kupplungsanordnung leicht und einfach gelöst werden.

## Patentansprüche

1. Kupplungsanordnung für eine Bearbeitungseinrichtung, insbesondere für eine Funkenerosionsmaschine, zur drehfesten Anordnung eines zu bearbeitenden Werkstückes, mit einem Palettenträger (1), einer Palette (18,24), sowie einer Pendelplatte (25), wobei das zu bearbeitende Werkstück an dem Pateitenträger (1) angeordnet ist, wobei der Palettenträger (1) in die auf der Pendelplatte (25) angeordnete Palette (24) angebracht ist wobei die Pendelplatte (25) eine senkrecht zur Pendelplatte (25) verlaufende Tragwand (26) aufweist und wobei der Palettenträger (1) und die Pendelpalette (25) Mittel aufweisen, die eine federnde Zentrierung bzw. Nivellierung der Palette (24) ermöglichen, **dadurch gekennzeichnet, dass** die Tragwand (26) Führungsorgane (27) aufweist, wobei die Tragwand (26) im Bereich der Führungsorgane (27) parallel zur Tragwandfläche ausgebildete Einschnitte (28,29) aufweist.

2. Kupplungsanordnung nach dem Anspruch 1, **dadurch gekennzeichnet, dass** die Einschnitte (28,29) als Drahterosionsschnitte ausgebildet sind.

3. Kupplungsanordnung nach einem der Ansprüche 1 oder 2, **dadurch gekennzeichnet, dass** die Einschnitte (28, 29) in mindestens einem Führungsorgan (27) vorhanden sind und längs der Gleitflächen verlaufen.

4. Kupplungsanordnung nach einem der Ansprüche 1 bis 3, **dadurch gekennzeichnet, dass** die Führungsorgane (27) als schwalbenschwanzförmige Gleitflächen ausgebildet sind.

5. Kupplungsanordnung nach einem der Ansprüche 1 bis 4, **dadurch gekennzeichnet, dass** die Pendelplatte (25) mit dem zu bearbeitenden Werkstück in der Höhe verstellbar ist.

6. Kupplungsanordnung nach einem der Ansprüche 1 bis 5, **dadurch gekennzeichnet, dass** die Pendelplatte (25) als eine Justierplatte (31) mit vorgespannten Federpaketen (32) zur Feinjustierung bzw. -Nivellierung ausgebildet ist.

## Claims

1. Coupling arrangement for a machining apparatus, in particular for an electrical discharge machine, for the rotationally fixed arrangement of a workpiece to be machined, having a pallet carrier (1), a pallet (18, 24), and a pendulum plate (25), the workpiece to be machined being arranged on the pallet carrier (1), the pallet carrier (1) being fixed in the pallet (24) arranged on the pendulum plate (25), the pendulum plate (25) having a supporting wall (26) which runs perpendicularly to the pendulum plate (25), and the pallet carrier (1) and the pendulum plate (25) having means which permit flexible centring or levelling of the pallet (24), **characterized in that** the supporting wall (26) has guide members (27), the supporting wall (26) having incisions (28, 29) formed in the region of the guide members (27) parallel to the supporting wall surface.

2. Coupling arrangement according to Claim 1, **characterized in that** the incisions (28, 29) are electrical-discharge wire cuts.

3. Coupling arrangement according to either of Claims 1 and 2, **characterized in that** the incisions (28, 29) are present in at least one guide member (27) and run along the sliding surfaces.

4. Coupling arrangement according to one of Claims 1 to 3, **characterized in that** the guide members (27) are designed as dovetail sliding surfaces.

5. Coupling arrangement according to one of Claims 1 to 4, **characterized in that** the pendulum plate (25) with the workpiece to be machined is vertically adjustable.

6. Coupling arrangement according to one of Claims 1 to 5, **characterized in that** the pendulum plate (25) is designed as an adjusting plate (31) having preloaded spring assemblies (32) for the fine adjustment or levelling.

## Revendications

1. Dispositif d'accouplement pour un équipement d'usinage, en particulier pour une machine d'électroérosion, servant à la mise en place, solidaire en rotation, d'une pièce à usiner, avec un porte-palette (1), une palette (18, 24) ainsi qu'un plateau oscillant (25), la pièce à usiner étant disposée sur le porte-palette (1), le porte-palette (1) étant monté sur la palette (24) disposée sur le plateau oscillant (25), le plateau oscillant (25) présentant une paroi portante (26) s'étendant perpendiculairement au plateau oscillant (25) et le porte-palette (1) et le plateau oscillant (25) présentant des moyens qui permettent un centrage élastique et un nivelage de la palette (24), **caractérisé en ce que** la paroi portante (26) présente des organes de guidage (27), la paroi portante (26) présentant des entailles (28, 29) réalisées parallèlement à la surface de la paroi portante dans la zone des organes de guidage (27).

2. Dispositif d'accouplement selon la revendication 1, **caractérisé en ce que** les entailles (28, 29) sont réalisées sous forme de découpes d'érosion par fil.

3. Dispositif d'accouplement selon l'une quelconque des revendications 1 et 2, **caractérisé en ce que** les entailles (28, 29) sont disposées dans au moins un organe de guidage (27) et s'étendent le long des surfaces de glissement.

4. Dispositif d'accouplement selon l'une quelconque des revendications 1 à 3, **caractérisé en ce que** les organes de guidage (27) sont réalisés sous forme de surfaces de glissement en queue d'aronde.

5. Dispositif d'accouplement selon l'une quelconque des revendications 1 à 4, **caractérisé en ce que** le plateau oscillant (25) avec la pièce à usiner est réglable en hauteur.

6. Dispositif d'accouplement selon l'une quelconque des revendications 1 à 5, **caractérisé en ce que** le plateau oscillant (25) est réalisé sous forme d'un plateau d'ajustage (31) avec des jeux de ressorts (32) précontraints pour l'ajustage précis ou le nivelage.
